(19) Europäisches Patentamt

European Patent Office

Office européen des brevets

(11) **EP 1 724 572 A1**

(12) **DEMANDE DE BREVET EUROPEEN**

(43) Date de publication:
**22.11.2006 Bulletin 2006/47**

(21) Numéro de dépôt: **06114117.2**

(22) Date de dépôt: **17.05.2006**

(51) Int Cl.:
*G01N 25/18* (2006.01)    *G01N 27/18* (2006.01)
*G01N 30/66* (2006.01)

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **19.05.2005 FR 0551298**

(71) Demandeur: **COMMISSARIAT A L'ENERGIE ATOMIQUE**
**75015 Paris (FR)**

(72) Inventeurs:
• **Thevenot, Gilles**
  **37250, MONTBAZON (FR)**
• **Saillard, Jérôme**
  **37000, TOURS (FR)**

(74) Mandataire: **Poulin, Gérard**
**Société BREVATOME**
**3, rue du Docteur Lancereaux**
**75008 Paris (FR)**

(54) **Cellule de mesure de la conductivité et de la diffusivité thermique d'un fluide et sonde pour cette cellule**

(57) Cellule de mesure de la conductivité et de la diffusivité thermique d'un fluide et sonde pour cette cellule.

La cellule, notamment pour la mesure de la conductivité et/ou de la diffusivité thermique d'un fluide, comprend une cellule réceptacle inférieure (4), une cellule réceptacle supérieure (6) adaptée sur la cellule réceptacle inférieure (4) de manière à délimiter une chambre de mesure (8) pouvant contenir un échantillon de fluide, la cellule réceptacle supérieure (6) comportant un passage (12) pour l'introduction d'une sonde de mesure (60) dans la chambre de mesure. La cellule réceptacle inférieure et la cellule réceptacle supérieure (6) sont disposées à l'intérieur d'une chambre (28) thermostatée et pressurisable.

La cellule décrite ci-dessus permet d'effectuer des mesures de conductivité et de diffusivité thermique sur un faible volume d'échantillon (inférieur à 2 cm$^3$). La sollicitation exercée sur l'échantillon est faible (inférieure à 50mJ). La cellule est constituée de matériaux chimiquement inertes qui permettent la caractérisation de fluides très corrosifs. Les mesures peuvent être effectuées en température et en pression.

FIG. 1

EP 1 724 572 A1

## Description

## DOMAINE TECHNIQUE

L'invention concerne une cellule, notamment une cellule destinée à la mesure des caractéristiques de conductivité et de diffusivité thermique d'un fluide. Elle comprend également une sonde de mesure destinée à cette cellule.

La connaissance de la conductivité thermique $\lambda$ des fluides est particulièrement importante pour la science et l'industrie. En effet, cette grandeur apparaît dans la plupart des phénomènes stationnaires ou instationnaires mettant en jeu des transferts de chaleur. Il en est de même de la connaissance de la diffusivité thermique $a$ des fluides qui apparaît dans la plupart des phénomènes instationnaires de transfert de chaleur.

Les mesures des conductivités et diffusivités thermiques des fluides sont donc nécessaires d'autant plus que ces propriétés dépendent de la pression et de la température et qu'il existe de nombreux fluides pour lesquels les données concernant $\lambda$ et $a$ sont limitées, voire inexistantes, en particulier pour les nouveaux fluides dont les propriétés doivent être évaluées avant leur utilisation industrielle.

Les techniques utilisées pour ces mesures peuvent être stationnaires ou instationnaires, ces dernières étant de très loin les plus utilisées. Le succès des méthodes instationnaires réside dans la possibilité de réaliser des mesures rapides aux premiers instants d'un régime transitoire avant l'apparition parasite de mouvements de convection.

Parmi les nombreuses variantes métrologiques imaginées pour la mesure $\lambda$ dans un fluide, l'état de l'art est constitué par un dispositif dans lequel la source thermique transitoire est constituée par un fil thermique fin chauffé électriquement, le plus souvent à l'aide d'un échelon de courant. Pour les cas particuliers de fluides électroconducteurs et/ou corrosifs et/ou explosifs, les dispositifs métrologiques existants concernant la conductivité sont infiniment moins nombreux et même inexistants pour certains fluides ($HNO_3$, $H_2SO_4$, HCl, etc.) qui ont pourtant une grande importance industrielle. Ce constat est plus vrai encore en ce qui concerne la mesure directe de la diffusivité a de ces mêmes fluides.

On connaît déjà des cellules de mesure et des sondes de mesure de la conductivité et de la diffusivité d'un fluide. Toutefois, les cellules connues sont mal adaptées aux mesures répétitives et systématiques. Elles nécessitent des échantillons liquides de plusieurs cm$^3$, voire de plusieurs dizaines de cm$^3$.

Concernant les sondes de mesure actuellement connues, les fils sont longs généralement plusieurs centimètres, voire plusieurs dizaines de centimètres. Ils doivent être utilisés impérativement en position verticale avec un système complexe de supports mécaniques. En outre, les sondes de mesure connues utilisant la technologie des fils oxydés en tantale n'ont jamais été précédemment employées pour des fluides très corrosifs tels que $HNO_3$, HCl ou $H_2SO_4$.

L'invention a pour objet une cellule de mesure qui remédie à ces inconvénients. Elle permet notamment de réaliser des mesures sur des échantillons de faible volume. A cet effet, elle comprend une cellule réceptacle inférieure, une cellule réceptacle supérieure adaptée sur la cellule réceptacle inférieure de manière à délimiter une chambre de mesure pouvant contenir un échantillon de fluide, la cellule réceptacle supérieure comportant un passage pour l'introduction d'une sonde de mesure dans la chambre de mesure. Avantageusement, la cellule réceptacle inférieure et la cellule réceptacle supérieure sont disposées à l'intérieur d'une chambre thermostatée et pressurisable.

De préférence, les cellules réceptacles inférieure et supérieure sont en PTFE (ou en tout autre matériau inerte chimiquement vis-à-vis des fluides à caractériser).

L'invention concerne également une sonde de mesure de la conductivité et de la diffusivité thermiques d'un fluide qui comporte un corps, une première et une seconde paires de broches traversant le corps, la première paire de broche supportant un grand fil, la seconde paire de broche un petit fil, le grand fil et le petit fil étant disposés horizontalement et parallèlement l'un à l'autre.

De préférence, les broches et les fils sont en tantale et ils sont isolés électriquement par une nanocouche de pentoxyde de tantale ($Ta_2O_5$) déposée après soudure des fils et réduction électrochimique du petit fil. Avantageusement, le corps est réalisé en céramique et les broches sont entourées d'un liant chimiquement résistant et assurant la tenue mécanique (exemple : résine époxy).

Des caractéristiques complémentaires ou alternatives sont énumérées ci-après :

- le diamètre du grand fil de la sonde est de 25$\mu$m.
- la longueur du grand fil est comprise entre 10mm et 15mm.
- le diamètre du petit fil est compris entre 5$\mu$m et 20$\mu$m.
- le petit fil est aminci électrochimiquement après soudure selon le diamètre des fils employés.
- la longueur du petit fil est comprise entre 1,5mm et 3mm.
- le grand fil et le petit fil sont distants de 100 microns à 500 microns à ajuster en fonction des fluides à caractériser.

D'autres caractéristiques et avantages de l'invention apparaîtront encore à la lecture de la description qui suit d'exemples de réalisation donnés à titre illustratif en référence aux figures annexées. Sur ces figures :

- la figure 1 est une vue générale en coupe selon le plan I-I de la figure 2 d'une cellule de mesure conforme à la présente invention et la figure 2 est une vue en perspective de cette même cellule ;

- la figure 3 est une vue en coupe de la cellule réceptable inférieure selon le plan III-III de la figure 1 et la figure 4 est une vue en coupe de cette même cellule selon le plan I-I de la figure 1 perpendiculaire au plan III-III ;
- la figure 5 est une vue en perspective de la cellule réceptacle supérieure et la figure 6 une vue en coupe de cette même cellule ;
- la figure 7 est une vue schématique d'une sonde de mesure destinée à la cellule de mesure ;
- les figures 8 et 9 sont des schémas qui illustrent respectivement le principe de la méthode de mesure de la conductivité thermique et de la diffusivité thermique d'un fluide.

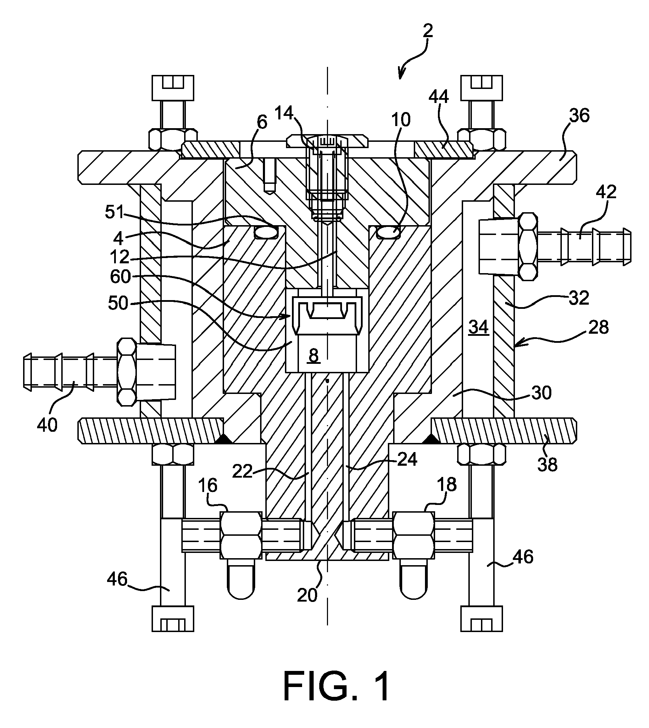

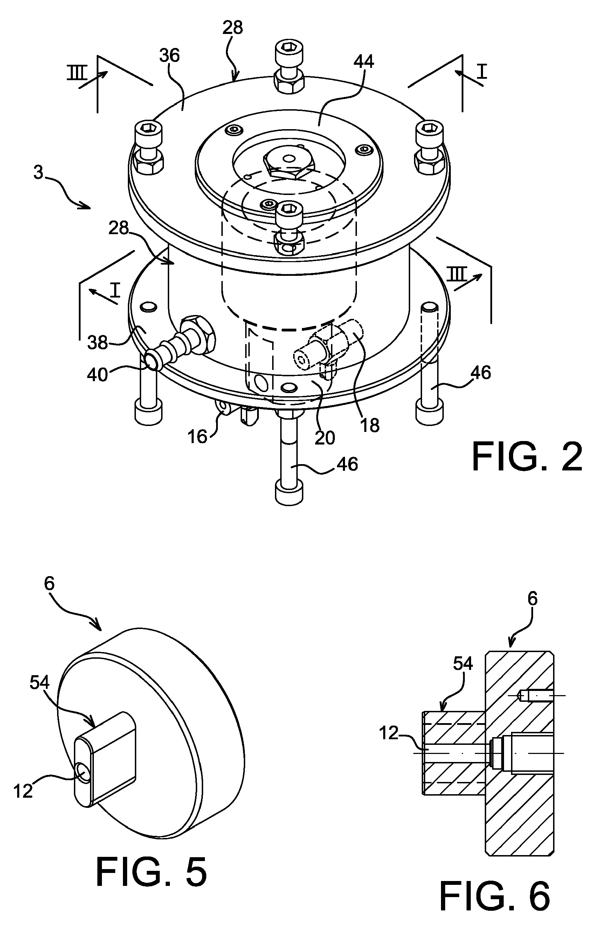

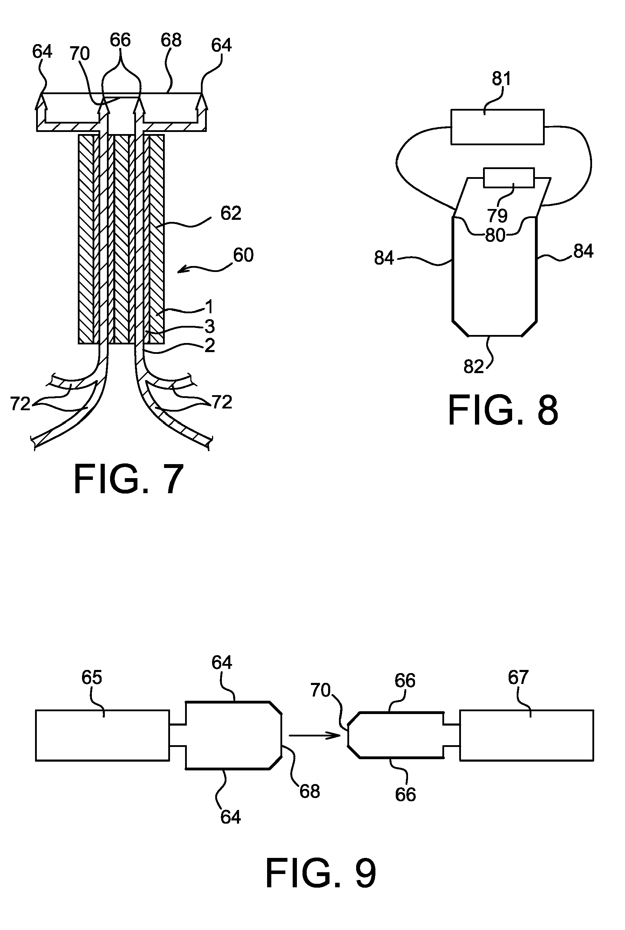

Sur les figures 1 et 2 la cellule de mesure de l'invention désignée par la référence générale 2 comprend une cellule réceptacle inférieure 4 et une cellule réceptacle supérieure 6. La cellule réceptacle supérieure 6 est adaptée de manière étanche sur la cellule réceptacle inférieure 4 afin de délimiter une chambre de mesure 8. Cette chambre présente un faible volume, 1,9cm$^3$ dans l'exemple décrit. L'étanchéité entre les cellules 4 et 6 est assurée par un joint, par exemple un joint torique 10 de sorte que la cellule peut être pressurisée. La cellule réceptacle supérieure comporte un passage traversant 12 permettant l'introduction d'une sonde de mesure 60 dans la chambre de mesure 8 qui sera décrite plus en détail ultérieurement (voir figure 7). La sonde de mesure 60 est maintenue par un support de sonde 14 qui est vissé dans un trou fileté de plus grand diamètre que le passage 12, l'étanchéité étant assurée par un joint torique.

Un robinet de remplissage 16 et un robinet de vidange 18 sont montés sur un prolongement inférieur 20 de la cellule réceptacle inférieure 4. Un conduit d'amenée 22 et un conduit d'évacuation 24 relient respectivement les robinets 16 et 18 à la chambre de mesure 8.

Conformément à l'une des caractéristiques avantageuse de l'invention, les cellules réceptacles inférieure 4 et supérieure 6 sont disposées à l'intérieur d'une chambre thermostatée et pressurisable désignée dans son ensemble par la référence 28. La chambre 28 est constituée d'une paroi cylindrique intérieure 30 et d'une paroi cylindrique extérieure 32 disposées coaxialement l'une à l'autre. Les parois 30 et 32 délimitent entres elles un volume annulaire 34 qui entoure la chambre de mesure 8. La paroi 30 comporte une collerette radiale 36 à sa partie supérieure tandis que la paroi extérieure 32 comporte, une collerette radiale 38 à son extrémité inférieure. Des raccords 40 et 42 permettant l'amenée et l'évacuation du fluide thermostaté dans la chambre annulaire 34 sont prévus sur la paroi circulaire 32 extérieure. La cellule réceptacle supérieure 6 est maintenue dans la chambre thermostatée par un capot 44 fixé par exemple par des vis. Comme on peut le voir plus particulièrement sur la figure 2, la cellule comporte des pieds 46, quatre dans l'exemple représenté, vissés dans la collerette inférieure 38 de la paroi cylindrique extérieure 32. Les pieds 46 sont ajustables de manière à pouvoir régler l'horizontalité de la cellule.

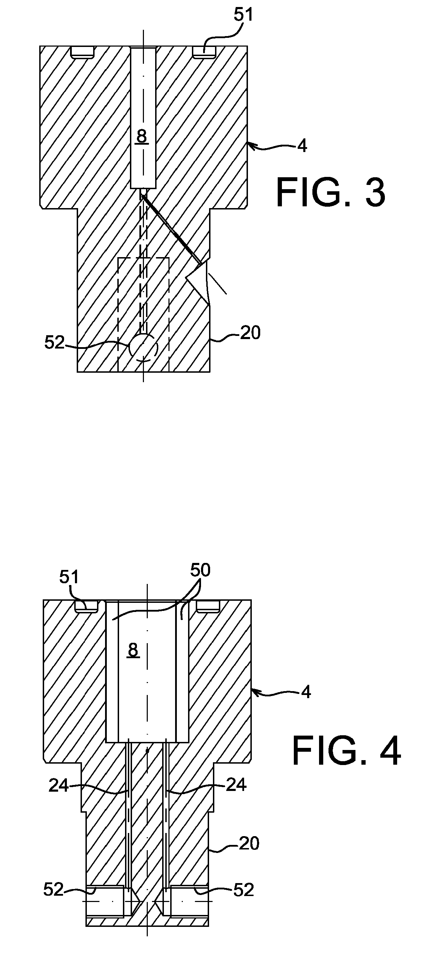

Les figures 3 et 4 sont des vues de détail de la cellule réceptacle inférieure 4. La figure 3 est une vue en coupe prise selon le plan III-III de la figure 2 tandis que la figure 4 est une vue en coupe selon le plan I-I perpendiculaire au plan III-III de la figure 2. Comme on peut le constater, la chambre de mesure 8 présente une forme allongée de forme sensiblement rectangulaire terminée à chacune de ses extrémités par des arrondis 50. La cellule réceptacle inférieure 4 comporte une gorge circulaire 51 destinée à recevoir le joint torique 10 (voir figure 1). Les alésages taraudés 52 formés dans le prolongement 20 sont destinés à recevoir les robinets 16 et 18 (voir figures 1 et 2).

La figure 5 est une vue en perspective de la cellule réceptacle supérieure. On peut voir la forme de la saillie 54 dont la forme s'adapte avec un ajustement serré à la chambre 8. On note également le passage 12 qui traverse la saillie 54 afin de permettre l'introduction de la sonde de mesure 60.

On a représenté sur la figure 7 une vue schématique d'une sonde de mesure destinée à la cellule de l'invention décrite et représentée sur les figures 1 à 6. La sonde, désignée par la référence générale 60, comporte un corps 62 réalisé en un matériau isolant électrique et thermique, ainsi que résistant à la corrosion, tel qu'une céramique type alumine ou silice. Le corps 62 supporte une première paire de broches 64 et une seconde paire de broches 66. Les broches 64 sont plus distantes l'une de l'autre que les deux broches 66. La première paire de broches supporte un grand fil 68, tandis que la seconde paire de broches 66 supporte un petit fil 70. Le petit fil et le grand fil sont disposés parallèlement l'un à l'autre. Ils sont distants l'un de l'autre de 100 microns à 500 microns à ajuster selon le fluide à analyser. En outre, lorsque la sonde 60 est disposée à l'intérieur de la cellule les fils 68 et 70 sont horizontaux. Toutefois cette position n'est pas impérative et la sonde pourrait prendre n'importe quelle orientation.

Le grand fil à une longueur comprise entre 10mm et 15mm et un diamètre de 25$\mu$m environ. Le petit fil a une longueur de 1,5mm à 3mm et un diamètre de 5$\mu$m à 20$\mu$m environ. Etant donné le diamètre minimal de 25$\mu$m des fils disponibles commercialement, il est nécessaire de réduire le petit fil 70 par voie électrochimique après soudure sur les broches 66. Le petit fil et le grand fil sont réalisés de préférence en tantale oxydé (Ta). Les broches 64 et 66 sont constituées du même métal. Elles présentent une forme effilée et les fils sont soudés à leurs extrémités pointues. Le diamètre des broches de tantale est d'environ 0,8mm (autour de 0,1mm à leur extrémité effilée) et leur hauteur de 5mm environ. Les fils et les broches sont avantageusement isolés électriquement par une nanocouche de pentoxyde de tantale (Ta$_2$O$_5$) réalisée électrochimiquement après l'électrosoudage des fils 68 et 70 sur les broches et après la réduction électrochimique du fil 70. Les matériaux de la cellule et de la sonde sont compatibles avec la quasi-totalité des fluides, y compris l'acide nitrique, l'acide sulfurique, l'acide chlorhydrique, etc. Chacune des broches 64 et 66 est prolongée par un fil de tantale 72 d'un diamètre de 0,8mm environ qui permet d'alimenter en courant électrique les fils 68 et 70. Les fils 72 traversent le corps de céramique 62 et sont maintenus à l'intérieur de celui-ci via l'introduction d'un liant chimiquement résistant et assurant la tenue mécanique de l'ensemble.

La conductivité thermique λ est mesurée par la méthode classique du fil chaud en régime transitoire. Le principe de la méthode, schématisé sur la figure 8, est basé sur le fait qu'un fil métallique suffisamment fin, immergé dans un fluide et soumis à un échauffement par effet joule est susceptible de provoquer des transferts de chaleur purement conductifs au sein du fluide. Ses propriétés thermiques sont alors accessibles à partir de la théorie en mesurant les variations de température du fil par détermination de l'évolution de sa résistance électrique. Ainsi, la mesure de la tension e aux bornes d'un fil fin soumis à un échelon d'intensité i permet d'accéder à la conductivité thermique λ du fluide dans lequel il baigne via l'utilisation de l'équation du fil chaud en régime transitoire :

$$\lambda = \frac{\alpha_o R_o^2}{4\pi l} \cdot \frac{(1 + \alpha_o T) i^3}{de/dlnt}$$

$\alpha_o$ : coefficient de température du fil à 0°C ($K^{-1}$)
$R_o$ : résistance du fil à 0°C ($\Omega$)
l : longueur du fil (m)
i : intensité du créneau appliqué au fil (A)
T : température du fluide (°C)
de/dlnt : pente de la droite de la tension e en fonction du logarithme népérien du temps (conduction seule)

Selon les fluides, la durée de mesure de la conductivité thermique peut varier de 1 seconde à 5 secondes environ.

Comme représenté sur la figure 8, une intensité constante est appliquée par la source 79 entre les extrémités 80 du fil 82 supporté par les broches 84. Le fil 82 constitue une source linéique de chaleur. La tension à ses bornes, représentative de son élévation de température, est mesurée en 81.

Avec la sonde de mesure de l'invention le grand fil 68 ou le petit fil 70 peuvent être utilisés indifféremment pour la mesure de conductivité thermique de l'échantillon de fluide contenu dans la chambre de mesure 8. Cependant, il est préférable d'utiliser le grand fil.

Pour la mesure de diffusivité thermique a du fluide, (figure 9) la méthode utilisée nécessite l'utilisation des deux fils parallèles 68 et 70. Le grand fil 68 est utilisé comme source thermique (émetteur). Un générateur d'impulsions est raccordé aux broches 64. Le petit fil 70 est utilisé comme détecteur thermique (capteur). L'évolution de la tension à ses bornes, représentative de son élévation de température, est mesurée en 67.

Le principe est basé sur la mesure du temps $t_m$ correspondant à l'échauffement maximal du liquide au niveau du détecteur thermique à une distance r de la source linéaire délivrant un créneau de puissance de durée $t_0$. La valeur théorique de la diffusivité thermique est alors donnée par la relation suivante :

$$a = \frac{r^2}{4} \cdot \frac{\left[1/(t_m - t_o) - (1/t_m)\right]}{\ln\left[t_m/(t_m - t_o)\right]}$$

r : distance entre le fil émetteur 68 et le fil récepteur 70 ;
$t_0$ : durée de créneau de puissance délivré par la source (grand fil 68) (s) ;
$t_m$ : temps correspondant à l'échauffement maximal du détecteur thermique (petit fil 70) (s).

Selon la nature des fluides, la durée de mesure de la diffusivité thermique a peut varier de quelques millisecondes à quelques dizaines de millisecondes. Compte tenu du niveau très bas (inférieur à 50mJ) des énergies injectées dans l'échantillon de fluide, les mesures de λ et de a peuvent être réalisées successivement sur un temps court (quelques dizaines de secondes). De plus, les méthodes d'exploitation associées au dispositif de mesure ne requièrent pas de position particulière des fils. En d'autres termes, étant donné leur faible flèche, il n'est pas nécessaire que les fils soient disposés de manière verticale, comme dans les dispositifs classiques. Ils peuvent être placés horizontalement, comme dans l'exemple représenté.

Le dispositif métrologique de l'invention permet ainsi de déterminer rapidement et en toute sécurité les propriétés λ et a de fluide éventuellement électroconducteur et/ou corrosif et/ou explosif. Ces avantages découlent en particulier du faible volume de la chambre de mesure, qui est de préférence inférieur à 2cm³ et de la faible énergie transmise au fluide, inférieure à 50mJ, comme il l'a été expliqué précédemment. Les procédures peuvent être automatisées.

**Revendications**

1.    Cellule, notamment pour la mesure de la conductivité et/ou de la diffusivité thermique d'un fluide, **caractérisée en ce qu'**elle comprend une cellule réceptacle inférieure (4), une cellule réceptacle supérieure (6) adaptée sur la cellule réceptacle inférieure (4) de manière à délimiter une chambre de mesure (8) pouvant contenir un échantillon de fluide, la cellule réceptacle supérieure (6) comportant un passage (12) pour l'introduction d'une sonde de mesure (60) dans la chambre de mesure.

**2.** Cellule selon la revendication 1, **caractérisée en ce que** la cellule réceptacle inférieure (4) et la cellule réceptacle supérieure (6) sont disposées à l'intérieur d'une chambre (28) thermostatée et pressurisable.

**3.** Cellule selon l'une des revendications 1 ou 2, **caractérisée en ce qu'**elle comporte un robinet de remplissage (16) et un robinet de vidange (18) montés sur la cellule réceptacle inférieure (4).

**4.** Cellule selon l'une des revendications 1 à 3, **caractérisée en ce que** la cellule réceptacle inférieure (4) et la cellule réceptacle supérieure (6) sont en PTFE ou en tout autre matériau inerte chimiquement vis-à-vis des fluides à caractériser.

**5.** Cellule selon l'une des revendications 1 à 4, **caractérisée en ce que** le volume de la chambre de mesure (8) est inférieur à 2cm$^3$.

**6.** Sonde de mesure de la conductivité et de la diffusivité thermiques d'un fluide, **caractérisée en ce qu'**elle comporte un corps (62), une première et une seconde paires de broches (64, 66) traversant le corps (62), la première paire de broches (64) supportant un grand fil (68), la seconde paire de broches (66) supportant un petit fil (70), le grand fil et le petit fil étant disposés parallèlement l'un à l'autre.

**7.** Sonde selon la revendication 6, **caractérisée en ce que** les broches (64) et les fils (68, 70) sont en tantale.

**8.** Sonde selon la revendication 6 ou 7, **caractérisée en ce que** les broches et les fils sont isolés électriquement par une nanocouche de pentoxyde de tantale (Ta$_2$O$_5$) déposée après soudure des fils et réduction électrochimique du petit fil.

**9.** Sonde selon l'une des revendications 6 à 8, **caractérisée en ce que** le corps (62) est réalisé en céramique.

**10.** Sonde selon l'une des revendications 6 à 9, **caractérisée en ce que** les broches sont entourées d'un liant chimiquement résistant et assurant la tenue mécanique (exemple : résine époxy) à l'intérieur du corps (62).

**11.** Sonde selon l'une des revendications 6 à 10, **caractérisée en ce que** le diamètre du grand fil (68) est de 25μm.

**12.** Sonde selon l'une des revendications 6 à 11, **caractérisée en ce que** la longueur du grand fil (68) est comprise entre 10mm et 15mm.

**13.** Sonde selon l'une des revendications 6 à 12, **caractérisée en ce que** le diamètre du petit fil (70) est compris entre 5μm et 20μm.

**14.** Sonde selon la revendication 13, **caractérisé en ce que** le petit fil est aminci électrochimiquement après soudure selon le diamètre des fils employés.

**15.** Sonde selon l'une des revendications 6 à 13, **caractérisée en ce que** la longueur du petit fil est comprise entre 1,5mm et 3mm.

**16.** Sonde selon l'une des revendications 6 à 15, **caractérisée en ce que** le grand fil et le petit fil sont distants de 100 microns à 500 microns à ajuster en fonction des fluides à caractériser.

FIG. 1

FIG. 2

FIG. 5

FIG. 6

51

8

4

FIG. 3

52

20

51

50

8

4

24

24

FIG. 4

20

52

52

FIG. 7

FIG. 8

FIG. 9

Office européen
des brevets

**RAPPORT DE RECHERCHE EUROPEENNE**

Numéro de la demande

EP 06 11 4117

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 3 097 520 A (WILMER R. THOMPSON) 16 juillet 1963 (1963-07-16) | 1,4 | INV. G01N25/18 |
| A | * colonne 3, ligne 65 - colonne 4, ligne 22; figure 2 * ----- | 2,3 | G01N27/18 G01N30/66 |
| X | US 3 481 179 A (STEPHEN ROLAND HOWARTH) 2 décembre 1969 (1969-12-02) * colonne 2, ligne 23 - colonne 3, ligne 47; figures 1,4 * ----- | 1,4 | |
| X | US 4 741 198 A (FARREN ET AL) 3 mai 1988 (1988-05-03) * colonne 1, ligne 6-9 * * colonne 4, ligne 6-34; figure 3 * ----- | 1,4 | |
| A | US 3 537 914 A (EDWARD W. CIEPLINSKI ET AL) 3 novembre 1970 (1970-11-03) * colonne 2, ligne 64 - colonne 3, ligne 16; figure 1 * ----- | 1-4 | |
| A | US 3 888 110 A (CLARK ET AL) 10 juin 1975 (1975-06-10) * colonne 4, ligne 58 - colonne 5, ligne 47; figures 1,3 * * abrégé * ----- | 1,3-5 | DOMAINES TECHNIQUES RECHERCHES (IPC) G01N G01F |
| A | US 3 791 195 A (LOE W,US) 12 février 1974 (1974-02-12) * le document en entier * ----- | 1,3-5 | |
| A | DE 103 18 450 B3 (EMERSON PROCESS MANAGEMENT MANUFACTURING GMBH & CO. OHG) 22 juillet 2004 (2004-07-22) * page 4, alinéa 24-29; figure 2 * * abrégé * ----- -/-- | 1-4 | |

Le présent rapport a été établi pour toutes les revendications

| Lieu de la recherche | Date d'achèvement de la recherche | Examinateur |
|---|---|---|
| Munich | 2 octobre 2006 | Filipas, Alin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................................

& : membre de la même famille, document correspondant

EPO FORM 1503 03.82 (P04C02)

Office européen
des brevets

**RAPPORT DE RECHERCHE EUROPEENNE**

Numéro de la demande

EP 06 11 4117

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 1 802 713 A (HEBLER WILLIAM O) 28 avril 1931 (1931-04-28) * le document en entier * ----- | 1,3,4 | |
| Y | WO 2004/077037 A (ABB RESEARCH LTD; SCHMIDT, CHRISTIAN-JOACHIM; WETZKO, MANFRED; VOGEL,) 10 septembre 2004 (2004-09-10) | 6 | |
| A | * abrégé * * page 10, ligne 7 - page 11, ligne 5 * ----- | 7-16 | |
| Y | EP 1 408 313 A (WEINMANN GERAETE FUER MEDIZIN GMBH & CO. KG) 14 avril 2004 (2004-04-14) * alinéas [0053] - [0055] * ----- | 6 | |
| A | US 4 363 238 A (WILLAM ET AL) 14 décembre 1982 (1982-12-14) * colonne 2, ligne 61 - colonne 3, ligne 8 * ----- | 6 | |
| A | EP 0 361 278 A (SNOW BRAND MILK PRODUCTS & CO., LTD; SNOW BRAND MILK PRODUCTS CO., LTD) 4 avril 1990 (1990-04-04) * colonne 5, ligne 8-30 * * colonne 7, ligne 9-37 * * colonne 9, ligne 32-43 * ----- | 6-15 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 2 octobre 2006 | Filipas, Alin |

EPO FORM 1503 03.82 (P04C02)

**Office européen**

**des brevets**

Numéro de la demande

EP 06 11 4117

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☒ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

**EP 1 724 572 A1**

**Office européen**
**des brevets**

**ABSENCE D'UNITÉ D'INVENTION**
**FEUILLE SUPPLÉMENTAIRE B**

Numéro de la demande

EP 06 11 4117

La division de la recherche estime que la présente demande de brevet européen ne satisfait pas à l'exigence relative à l'unité d'invention et concerne plusieurs inventions ou pluralités d'inventions, à savoir :

```
1. revendications: 1-5

              Cellule de mesure comportant un passage.
              ---


2. revendications: 6-16

       Sonde comportant un corp, deux paires de broches et deux
       fils supportés par lesdites paires de broches.
              ---
```

EPO FORM P0402

## EP 1 724 572 A1

**ANNEXE AU RAPPORT DE RECHERCHE EUROPEENNE
RELATIF A LA DEMANDE DE BREVET EUROPEEN NO.**

EP 06 11 4117

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2006

| Document brevet cité au rapport de recherche | | | Date de publication | Membre(s) de la famille de brevet(s) | | Date de publication |
|---|---|---|---|---|---|---|
| US 3097520 | A | | 16-07-1963 | AUCUN | | |
| US 3481179 | A | | 02-12-1969 | DE | 1598878 A1 | 18-03-1971 |
| | | | | GB | 1116315 A | 06-06-1968 |
| US 4741198 | A | | 03-05-1988 | EP | 0285648 A1 | 12-10-1988 |
| | | | | JP | 1501096 T | 13-04-1989 |
| | | | | WO | 8802488 A1 | 07-04-1988 |
| US 3537914 | A | | 03-11-1970 | AUCUN | | |
| US 3888110 | A | | 10-06-1975 | AUCUN | | |
| US 3791195 | A | | 12-02-1974 | AUCUN | | |
| DE 10318450 | B3 | | 22-07-2004 | AUCUN | | |
| US 1802713 | A | | 28-04-1931 | AUCUN | | |
| WO 2004077037 | A | | 10-09-2004 | DE | 10309205 A1 | 30-09-2004 |
| EP 1408313 | A | | 14-04-2004 | DE | 10246683 A1 | 15-04-2004 |
| US 4363238 | A | | 14-12-1982 | DE | 2933116 A1 | 26-02-1981 |
| | | | | EP | 0024327 A1 | 04-03-1981 |
| | | | | JP | 1585890 C | 31-10-1990 |
| | | | | JP | 2007656 B | 20-02-1990 |
| | | | | JP | 56031736 A | 31-03-1981 |
| EP 0361278 | A | | 04-04-1990 | CA | 1315850 C | 06-04-1993 |
| | | | | DE | 68914762 D1 | 26-05-1994 |
| | | | | DE | 68914762 T2 | 10-11-1994 |
| | | | | JP | 1861498 C | 08-08-1994 |
| | | | | JP | 2088955 A | 29-03-1990 |
| | | | | JP | 5067907 B | 27-09-1993 |
| | | | | US | 5017875 A | 21-05-1991 |

EPO FORM P0460